(19) Europäisches Patentamt
European Patent Office
Office européen des brevets

(11) **EP 3 979 637 A1**

(12) **EUROPEAN PATENT APPLICATION**
published in accordance with Art. 153(4) EPC

(43) Date of publication:
06.04.2022 Bulletin 2022/14

(21) Application number: 20814592.0

(22) Date of filing: 22.05.2020

(51) International Patent Classification (IPC):
*H04N 17/00* (2006.01)        *G06T 7/80* (2017.01)
*H04N 5/232* (2006.01)        *H04N 5/243* (2006.01)

(52) Cooperative Patent Classification (CPC):
G06T 7/80; H04N 5/232; H04N 5/243; H04N 17/00

(86) International application number:
PCT/JP2020/020235

(87) International publication number:
WO 2020/241471 (03.12.2020 Gazette 2020/49)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 28.05.2019 JP 2019099558

(71) Applicant: **Hitachi Astemo, Ltd.**
**Ibaraki 312-8503 (JP)**

(72) Inventor: **ISHIHARA, Tomokazu**
**Hitachinaka-shi, Ibaraki 312-8503 (JP)**

(74) Representative: **MERH-IP Matias Erny Reichl Hoffmann**
**Patentanwälte PartG mbB**
**Paul-Heyse-Strasse 29**
**80336 München (DE)**

(54) **CALIBRATION METHOD**

(57)     Provided is a calibration method with which it is possible to calculate a noise threshold value corresponding to dark noise and optical shot noise. The calibration method comprises: a step for obtaining a light-shielded image 124 indicating an image captured in a light-shielded state and a light source image 125 indicating an image captured in a state of uniform light irradiation; a step for identifying an equation indicating a correspondence between a mean value of pixel values and a standard deviation of pixel values, from a light-shielded point 203 and a light source point 124, the light-shielded point 203 indicating a set of the mean value (pixel mean value $\mu$ 201) of the pixel values and the standard deviation (pixel standard deviation value $\sigma$ 202) of the pixel values in the light-shielded image 124, and light source points 1 to n indicating sets of the mean value of the pixel values and the standard deviation of the pixel values in the light source image 125; and a step for calculating a standard deviation of pixel values corresponding to a mean value of the pixel values according to an identified equation, as a noise threshold value (calibration value) 128.

*FIG. 1*

**Description**

Technical Field

The present invention relates to a calibration method.

Background Art

PTL 1 in the present technical field is disclosed. This publication discloses "an image processing apparatus including effective pixel acquisition means for acquiring an output of an effective pixel being a solid-state imaging element in a non-light shielding region from an image capturing device that has a light shielding region in which a plurality of light-shielded solid-state imaging elements are arranged, and the non-light shielding region in which a plurality of exposed solid-state imaging elements are arranged, and edge extraction means for extracting an edge portion having a difference equal to or greater than an edge threshold value set in advance, between the adjacent effective pixels. The image processing apparatus that recognizes a target object based on the edge portion extracted by the edge extraction means further includes light-shielded pixel acquisition means for acquiring an output of a light-shielded pixel being the solid-state imaging element in the light shielding region, noise estimation means for estimating a noise variation degree being a variation degree of a noise level contained in the output of the effective pixel, based on the output acquired by the light-shielded pixel acquisition means, and threshold-value setting means for setting an edge threshold value within a range in which the noise level exceeding the edge threshold value is lower than an occurrence probability set in advance, based on the noise variation degree estimated by the noise estimation means".

Citation List

Patent Literature

PTL 1: JP 2010-93623 A

Summary of Invention

Technical Problem

In image processing for recognizing a target object in a captured image, a noise threshold value (expressed as the edge threshold value in PTL 1) may be used as the means for extracting an edge portion having a difference equal to or greater than the edge threshold value set in advance, between the adjacent effective pixels. When the noise threshold value is set to be higher than the specific noise level in accordance with the model number of the image sensor or the individual, the number of objects that can be recognized is decreased (this is referred to as unrecognition).

On the other hand, when the noise threshold value is set to be low, an object that is not actually an object is erroneously recognized as an object due to the influence of the noise component (this is referred to as erroneous recognition). Therefore, in order to derive the performance of a recognition process, it is necessary to set the noise threshold value based on the noise level actually contained in the image.

An output image of an image sensor such as a complementary metal oxide semiconductor (CMOS) or a charge coupled device (CCD) contains, in principle, various noise components in addition to signal components. As the main noise components, there are dark noise being a variation in pixel value observed at the time of light shielding, optical shot noise which increases as the number of photons to be received increases, and the like.

According to the method in PTL 1, it is possible to set the noise threshold value (expressed as the edge threshold value in PTL 1) based on the dark noise. However, PTL does not disclose a method of setting the threshold value based on other noise components such as optical shot noise, and means for setting the noise threshold value effective for the entire region from a portion (dark portion) having a low pixel value to a portion (bright portion) having a high pixel value in a screen. As a result, there is a problem that the above-described unrecognition/erroneous recognition occurs due to a difference between the actual noise amount of the image sensor and the noise threshold value.

An object of the present invention is to provide a calibration method with which it is possible to calculate a noise threshold value corresponding to dark noise and optical shot noise.

Solution to Problem

In order to achieve the above object, the present invention includes: a step for obtaining a light-shielded image indicating an image captured in a light-shielded state and a light source image indicating an image captured in a state of uniform light irradiation; a step for identifying an equation indicating a correspondence between a mean value of pixel values and a standard deviation of the pixel value, from a light-shielded point and a light source point, the light-shielded point indicating a set of the mean value of the pixel values and the standard deviation of the pixel values in the light-shielded image, and the light source point indicating a set of the mean value of the pixel values and the standard deviation of the pixel values in the light source image; and a step for calculating a standard deviation of the pixel values corresponding to a mean value of the pixel value according to an identified equation, as a noise threshold value.

Advantageous Effects of Invention

According to the present invention, it is possible to calculate a noise threshold value corresponding to dark noise and optical shot noise. Objects, configurations, and advantageous effects other than those described above will be clarified by the descriptions of the following embodiments.

Brief Description of Drawings

[FIG. 1] FIG. 1 is a diagram illustrating a configuration of a calibration environment according to Embodiment 1.
[FIG. 2] FIG. 2 is a diagram illustrating measurement points and an approximation curve in noise threshold value calculation in Embodiment 1.
[FIG. 3] FIG. 3 is a diagram illustrating measurement points and an approximation curve in noise threshold value calculation according to Embodiment 2.
[FIG. 4] FIG. 4 is a diagram illustrating a calculation procedure of an analysis solution of a quadratic approximation curve in Embodiment 2.
[FIG. 5] FIG. 5 is a diagram illustrating measurement points and an approximation polygonal line in noise threshold value calculation according to Embodiment 3.
[FIG. 6] FIG. 6 is a diagram illustrating a configuration of a calibration environment according to Embodiment 4.
[FIG. 7] FIG. 7 is a diagram illustrating measurement points and an approximation curve in noise threshold value calculation after digital correction in Embodiment 4.

Description of Embodiments

Embodiments will be described below with reference to the drawings. Each of the embodiments relates to an image processing method for recognizing an object on a captured image by extracting a change point of a signal level, based on an input signal from an in-vehicle camera including an image sensor.

Embodiment 1

A calibration method for a noise threshold value according to the present embodiment will be described.

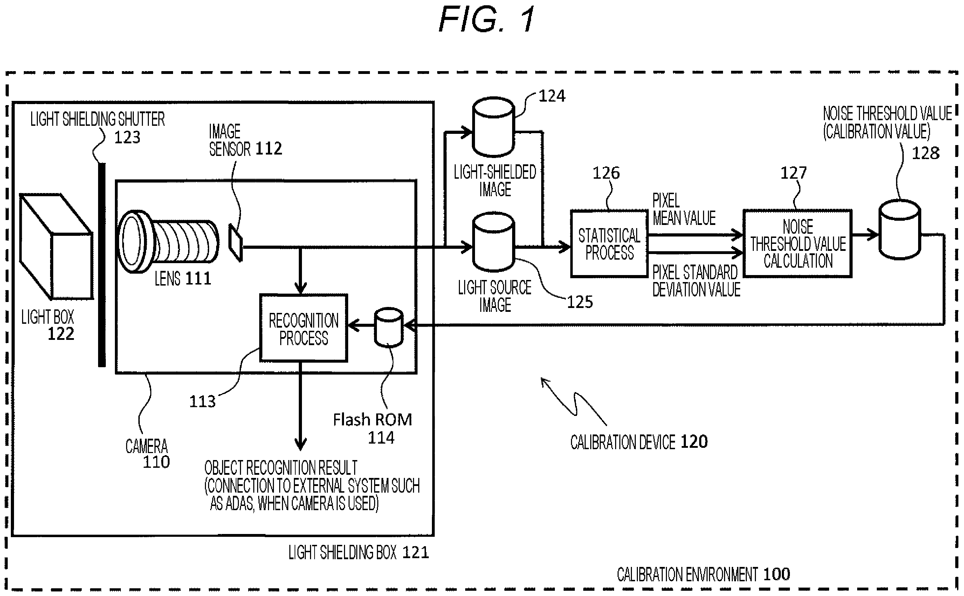

FIG. 1 illustrates an example of a configuration diagram of a calibration environment 100 in the present embodiment.
The calibration environment 100 is configured by a camera 110 and a calibration device 120.
The camera 110 includes a lens 111, an image sensor 112, a recognition process 113, and a Flash ROM 114.
The camera 110 is a camera that recognizes an object. The camera 110 is, for example, an in-vehicle camera for recognizing a situation around a vehicle, which is used for an automatic driving system or an advanced driver assistance system (ADAS) of the vehicle. In use, the camera 110 is connected to an external system such as the automatic driving system or the advanced driving assistance system of the vehicle.
The lens 111 forms an image of light within an angle of view of the lens on a light receiving surface of the image sensor 112. The image sensor 112 captures an image formed on the light receiving surface, converts the image into a digital image, and outputs the digital image. The recognition process 113 recognizes a recognition target object such as a pedestrian, a vehicle, an obstacle, and a signal around the vehicle from the digital image output from the image sensor, and outputs a recognition result to the external system. The recognition process 113 may be implemented by a logic circuit such as a field-programmable gate array (FPGA) or may be realized by a processor such as a central processing unit (CPU).
The digital signal output from the image sensor 112 contains noise. Thus, the recognition process 113 refers to a noise threshold value stored in the Flash ROM 114 when determining whether or not the digital signal indicates the recognition target object. The noise threshold value needs to be an optimum value according to the characteristics of an optical system in the camera 110. For example, a numerical value is determined by a work called as calibration performed for each individual or each model number before the camera 110 is connected to the external system and then used. As illustrated in FIG. 1, the calibration is performed by combining the camera 110 and the calibration device 120.

The calibration device 120 includes a light shielding box 121, a light box 122, a light shielding shutter 123, a light-shielded image 124, a light source image 125, a statistical process 126, noise threshold value calculation 127, and a noise threshold value (calibration value) 128. The statistical process 126 and the noise threshold value calculation 127 are implemented by, for example, a processor.

The calibration device 120 is a device that determines a noise threshold value to be recorded in the Flash ROM 114 of the camera 110 based on the digital image output from the image sensor 112 of the camera 110.

The light shielding box 121 shields external light to improve measurement accuracy. The light box 122 is a light source device equipped with a uniform light source using a halogen lamp, LED light, or the like. The light box 122 is installed in front of the lens 111 of the camera 110 so that the entire camera angle of view is irradiated with uniform light. The light shielding shutter 123 provides a mechanism in which a movable physical shutter mechanism is provided between the light box 122 and the camera 110, and the camera 110 can perform switching between an environment in which light from the light box 122 is shielded and an environment irradiated with the uniform light source of the light box 122.

In order to measure the noise of the image sensor 112, an image is captured by the camera 110. An image captured in the light-shielded environment is stored in a memory (buffer) or the like, as a light-shielded image 124. An image captured in the environment irradiated with the uniform light source is stored as a light source image 125 in the memory (buffer) or the like. The light-shielded image 124 and the light source image 125 are captured over a plurality of frames in order to improve the measurement accuracy. Furthermore, the capturing is performed under a plurality of conditions by changing an exposure time, the F value of the lens 111, and the like.

The statistical process 126 calculates a mean value and a standard deviation value of pixel values for a predetermined measurement region of the digital image based on the light-shielded image 124 and the light source image 125, and then outputs the mean value. For example, the measurement region is set to 100 horizontal pixels × 100 vertical pixels in the vicinity of the image center of the digital image, and the statistical process is performed on images of 16 consecutive frames. In this case, a pixel mean value and a pixel standard deviation value with $100 \times 100 \times 16 = 160{,}000$ pixels as a population parameter are calculated.

For example, as a support for a color image such as an RGB Bayer image, there are methods as follows: a method of using only Green pixels as a population; a method of calculating a monochrome luminance value by demosaicing for three colors of Red, Green, and Blue and then using the calculated luminance value as a population; and a method of individually calculating and outputting a pixel mean value and a pixel standard deviation value for each of Red, Green, and Blue pixels. A method is assumed to be determined in accordance with the contents of the recognition process 113 of the camera 110.

In the noise threshold value calculation 127, a noise threshold value (calibration value) 128 is calculated based on the pixel mean value and the pixel standard deviation value, and is written in the Flash ROM 114 of the camera 110. A calculation method will be described next.

<Calculation of Noise Threshold Value>

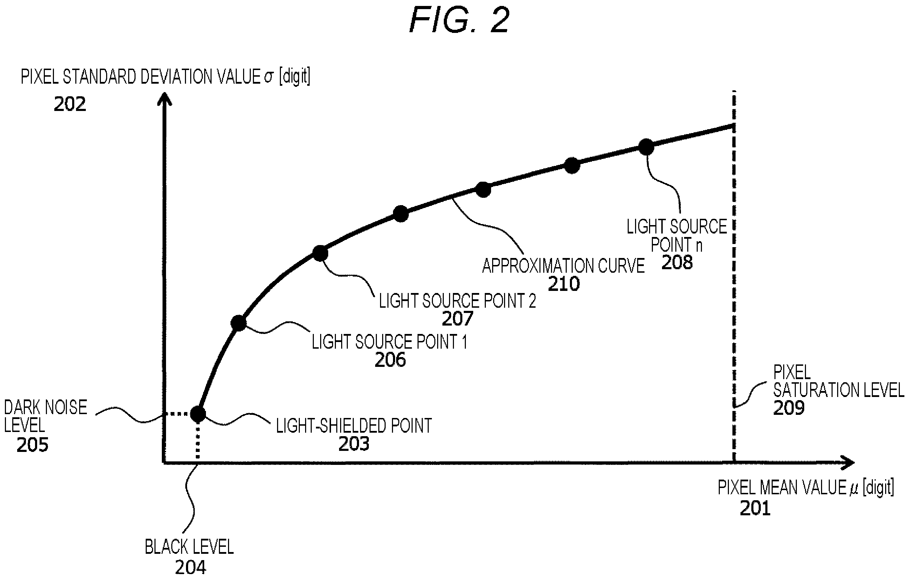

The calculation content of the noise threshold value calculation 127 in the present embodiment will be described with reference to FIG. 2. FIG. 2 is a diagram illustrating measurement points and an approximation curve in the noise threshold value calculation. The horizontal axis in the graph of FIG. 2 represents a pixel mean value $\mu$ 201 which is the output of the statistical process 126 in FIG. 1. The vertical axis represents the pixel standard deviation value $\sigma$ 202 which is the output of the statistical process 126 in FIG. 1.

The output of the statistical process 126 is plotted in two dimensions as illustrated in FIG. 2 as a measurement point $(\mu, \sigma)$ configured by a pair of the pixel mean value $\mu$ 201 and the pixel standard deviation value $\sigma$ 202.

In the following description, it is assumed that a measurement point based on the light-shielded image 124 in FIG. 1 is referred to as a "light-shielded point", and a measurement point based on the light source image 125 in FIG. 1 is referred to as a "light source point". FIG. 2 illustrates an example in which one light-shielded point 203 and n points $(n \geq 1)$ of a light source point 1 206, a light source point 2 207,..., and ta light source point n 208 are captured and calculated. The light source points 1, 2,..., n are measured under n conditions obtained by changing the exposure time of the image sensor 112 is changed. An approximation curve 210 is calculated by the least squares method based on the $(\mu, \sigma)$ of the measurement points of the total $(n + 1)$ points of the one light-shielded point and the n light source points.

The approximation curve 210 is calculated by determining a, b, and c with the least squares method so as to fit a quadratic equation of Equation (1-1) as follows, with the vertical axis $\sigma$ as an axis of a variable and the horizontal axis $\mu$ as an axis of a value. That is, the approximation curve 210 (equation) is identified by the least squares method.

[Equation 1-1]

$$\mu = f(\sigma, a, b, c) = a \times \sigma^2 + b \times \sigma + c \qquad \cdots \ (1-1)$$

A $\sigma$ value for each value of $\mu$ is obtained by an inverse function of Equation (1-1).

[Equation 1-2]

$$\sigma = f^{-1}(\mu, a, b, c) \qquad \cdots \ (1-2)$$

The reason why the vertical axis $\sigma$ is set as the axis of the variable is that the optical shot noise being one of the main noise components of the image sensor 112 is approximately proportional to the square root of $\mu$, and thus, the error of fitting in the quadratic or higher-order equation is reduced as compared with a case where the horizontal axis $\mu$ is set as the axis of the variable.

Since the approximation curve 210 is a monotonically increasing function, Equation (1-2) may be analytically solved from Equation (1-1), or may be numerically solved while increasing the $\mu$ value in Equation (1-1).

The noise threshold value to be output is defined as a mapping table from $\mu$ to $\sigma$. For example, assuming that the image sensor 112 outputs 0 to 4095 [digit] of 12 bits, the size of the mapping table is 12 bits $\times$ 4096 [word].

The calibration method in the present embodiment includes at least first to third steps as follows and is performed by the calibration device 120.

First Step: A light-shielded image 124 indicating an image captured in a light-shielded state and a light source image 125 indicating an image captured in a state irradiated with uniform light are obtained.

Second Step: An equation (approximation curve) indicating a correspondence between the mean value of the pixel values (pixel mean value $\mu$ 201) and the standard deviation of the pixel values (pixel standard deviation $\sigma$ 202) is identified from a light-shielded point 203 indicating a set of the mean value of the pixel values (pixel mean value $\mu$ 201) and the standard deviation of the pixel values (pixel standard deviation $\sigma$ 202) in the light-shielded image 124, and light source points 1 to n indicating sets of the mean values of the pixel values (pixel mean values $\mu$ 201) and the standard deviations of the pixel values (pixel standard deviations $\sigma$ 202) in the light source image 125.

Third Step: The standard deviation (pixel standard deviation $\sigma$ 202) of the pixel values, which corresponds to the mean value (pixel mean value $\mu$ 201) of the pixel values is calculated as a noise threshold value (calibration value) 128 by the identified equation (approximation curve).

Thus, it is possible to calculate the noise threshold value (calibration value) 128 corresponding to dark noise and optical shot noise.

In the present embodiment, the equation (approximation curve) is identified from one light-shielded point and one or more light source points. The camera 110 includes at least a memory (Flash ROM 114) that stores the noise threshold value (calibration value) 128, and a determination unit (recognition process 113) that determines adjacent pixels to be an edge when a difference between pixel values of the adjacent pixels exceeds the noise threshold value.

In the measurement of the light source point, the exposure time is changed in the present embodiment. As another means, a method of changing the light amount of the light box or a method of using a chart having different light amounts such as a grayscale chart may be adopted. This is because the output pixel value $\mu$ of the image sensor 112 is proportional to the exposure amount [lx·sec] obtained by multiplying the image-plane illuminance and the exposure time. As described above, there are several means for measuring a plurality of light source points. Some means including the means for changing the exposure time, which is used in the present embodiment are disclosed in "EMVA Standard 1288" which is the standard specification related to a camera characteristic evaluation method, which is edited by "European Machine Vision Assosiacion"(EMVA)".

The present embodiment has features of utilizing both the light-shielded point and the light source point in obtaining the approximation curve.

In the configuration using only the light-shielded point as in PTL 1, a dark noise component can be extracted, but it is not possible to extract an optical shot noise component.

In the configuration using only the light source points, the approximation curve 210 can be approximated to some extent with respect to a bright portion, but the curve is steep at a dark portion. Thus, it is not possible to obtain a correct curve unless some measurement points in the dark portion are taken. Furthermore, points that, when the measurement point in the dark portion is intended to be obtained, it is difficult to determine the shortest exposure time of the image sensor 112, or to narrow the light amount of the light box 122 or the grayscale chart are also factors of making it difficult to perform highly accurate measurement only at the light source point.

Therefore, in the present embodiment, the measurement points measured under different conditions, that is, the completely shielded environment and the environment irradiated with the light source, are plotted on one graph in FIG. 2 and treated in the same row to obtain a curve, thereby obtaining a highly accurate noise threshold value.

An effect that it is possible to perform an object recognition process with less unrecognized or erroneous recognition even in a dark portion at the time of actual traveling after calibration is obtained by obtaining the highly accurate noise threshold value.

<Modification Examples>

As a modification example of the present embodiment, the approximation curve 210 in FIG. 2 may be set to a cubic approximation curve instead of a quadratic approximation curve. In this case, the regression equation of the approximation curve 210 is as follows. That is, in the approximation curve 210 (equation), the mean value of the pixel values (pixel mean value $\mu$ 201) is represented by a cubic equation relating to the standard deviation of the pixel values (pixel standard deviation $\sigma$ 202).

[Equation 1-3]

$$\mu = f(\sigma, a, b, c, d) = a \times \sigma^3 + b \times \sigma^2 + c \times \sigma + d \quad \cdots \quad (1-3)$$

In the quadratic approximation, it is possible to perform approximation with high accuracy, short time, and stability, with respect to the image sensor 112 in which two noise components of the dark noise and the optical shot noise component are dominant. In the case of the cubic approximation, it is possible to perform approximation with high accuracy with respect to the image sensor 112 including another noise component such as pixel sensitivity variation in addition to the dark noise and the optical shot noise component.

As a modification example, the cubic or higher approximation may be used.

As a modification example, the horizontal axis $\mu$ may be used as the axis of the variable, and the vertical axis $\sigma$ may be used as the axis of the value axis. For example, when nonlinear signal processing for extending the dynamic range of the camera 110 is applied in the camera 110, it may be possible to perform fitting with high accuracy by setting the horizontal axis $\mu$ as the axis of the variable and the vertical axis $\sigma$, because the characteristic of the noise threshold value changes for each pixel mean value 201.

As a modification example, the regression method other than the least squares method may be used. For example, the priority of fitting for each gradation can be finely adjusted by using a weighted least squares method. That is, the ordered approximation curve 210 (equation) is identified by the weighted least squares method.

Embodiment 2

The configuration diagram of a calibration environment according to the present embodiment is the same as that in FIG. 1 in Embodiment 1.

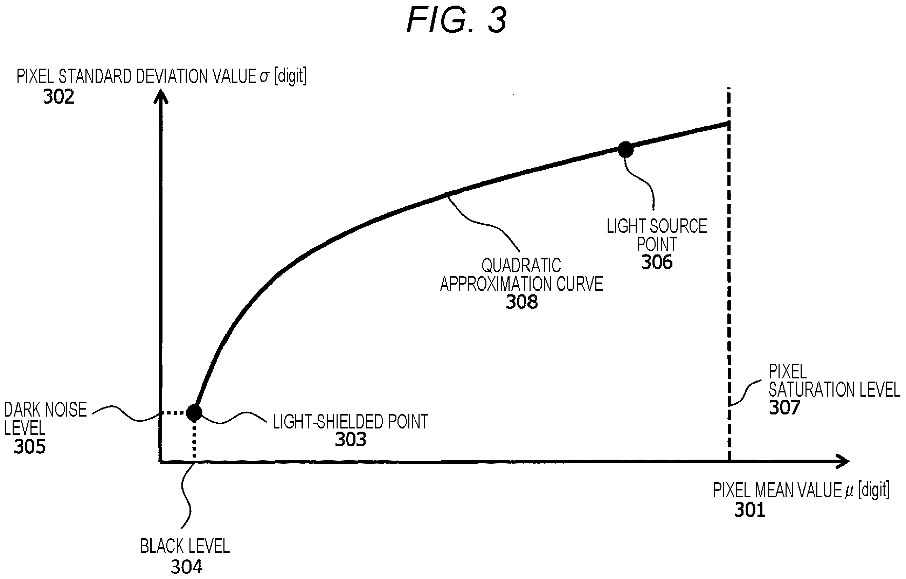

FIG. 3 in the present embodiment is a diagram illustrating measurement points and a quadratic approximation curve in noise threshold value calculation. FIG. 3 illustrates a special example in which a plurality of light source points illustrated in FIG. 2 in Embodiment 1 are narrowed down to only one light source point 306. In FIG. 3 in the present embodiment, only two points of a light-shielded point 303 and a light source point 306 are measured. Although the order of the approximation curve 210 illustrated in FIG. 2 may be any value such as the second order, the third order, and the n-th order in Embodiment 1, the approximation curve is limited to a quadratic approximation curve 308 in FIG. 3 in the present embodiment.

That is, in the quadratic approximation curve 308 (equation), the mean value of the pixel values (pixel mean value $\mu$ 301) is represented by a quadratic equation relating to the standard deviation of the pixel values (pixel standard deviation $\sigma$ 302). The quadratic approximation curve 308 (equation) is identified from one light-shielded point 303 and one light source point 306.

In the present embodiment, signal components and noise components of the image sensor 112 are modeled by the following equations (2-1) and (2-2). A signal model is represented by the following equation.

[Equation 2-1]

$$\mu_y = \mu_0 + K\mu_e \quad \cdots \quad (2-1)$$

A noise model is represented by the following equation.

[Equation 2-2]

$$\sigma_y{}^2 = \sigma_0{}^2 + \left( K\sqrt{\mu_e} \right)^2 \qquad \cdots \ (2-2)$$

The symbols are defined as (2-3) below.
[Equation 2-3]

$$
\left.
\begin{array}{l}
\mu_e : \\
\qquad \text{Means [e-] of number of photons} \\
\mu_y : \\
\qquad \text{Means [digit] of pixel values} \\
\sigma_y : \\
\qquad \text{Standard deviation [digit] of pixel values} \\
\mu_0 : \\
\qquad \text{Means [digit] of pixel values of light-shielded pixels} \\
\qquad \text{(dark level)} \\
\sigma_0 : \\
\qquad \text{Standard deviation [digit] of pixel values of light-} \\
\qquad \text{shielded pixels (dark noise)} \\
K : \\
\qquad \text{System gain [digit/e-]} \\
K\sqrt{\mu_e} : \\
\qquad \text{Standard deviation [digit] of pixel values depending on} \\
\qquad \text{number of photons (optical shot noise)}
\end{array}
\right\} \cdots (2-3)
$$

That is, in the models of the above equations (2-1) and (2-2), the noise is limited to the dark noise and the optical shot noise. With the simplified model focusing only on the main noise components, it is possible to analytically obtain the whole of the quadratic approximation curve 308 with only two measurement points.

<Calculation of Noise Threshold Value>

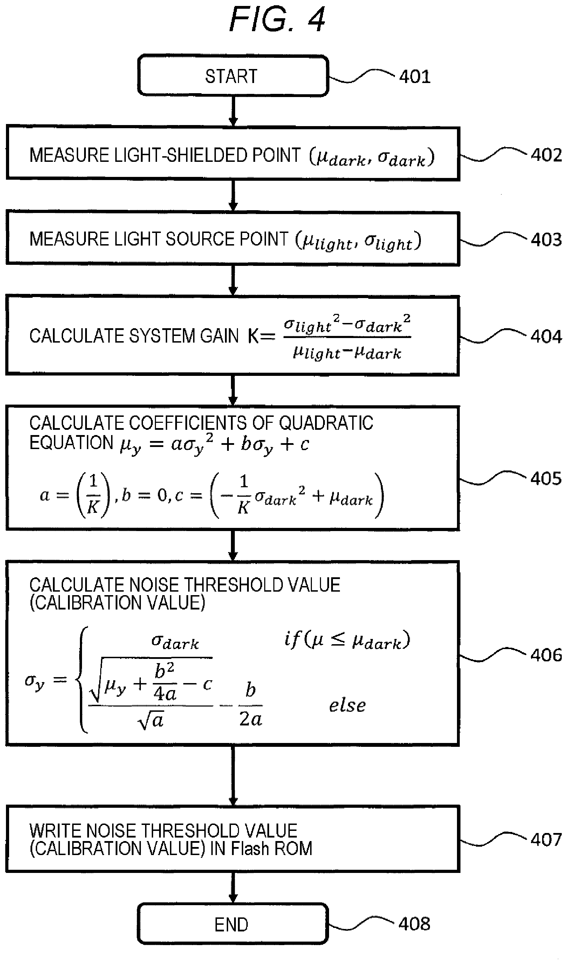

FIG. 4 illustrates a procedure of calculating a noise threshold value in the present embodiment. In Steps 401 and 402, a measurement value ($\mu_{dark}$, $\sigma_{dark}$) of one light-shielded point and a measurement value $\mu_{light}$, $\sigma_{light}$) of one light source point are used as an input. Since the calculation of Steps 404 to 406 is based on the analysis solution of Equations (2-1) and (2-2), the noise threshold value is uniquely determined from the two measurement points. The reason why only two measurement points are sufficient instead of three measurement points in spite of the quadratic equation is that b = 0 as described in Step 405. In Step 407, the noise threshold value is output to the Flash ROM 114 of the camera 110 in FIG. 1.
According to the method in the present embodiment, it is possible to obtain a highly accurate noise threshold value with the minimum number of measurement points. Thus, an effect that it is possible to minimize the measurement time required for calibration is obtained.
In addition, in measuring the light source point, in order to perform accurate measurement from a point having a high pixel value to a point having a low pixel value, there are problems such as the accuracy of maintenance of the light amount of the light source and the accuracy of the exposure time. Thus, it is often difficult to improve the measurement accuracy. According to the method in the present embodiment, it may be possible to accurately acquire only one point having a high pixel value with respect to the light source point. Thus, an effect that it is possible to suppress the cost required for manufacturing and maintaining the calibration device is obtained.

Embodiment 3

The configuration diagram of a calibration environment according to the present embodiment is the same as that in FIG. 1 in Embodiment 1.

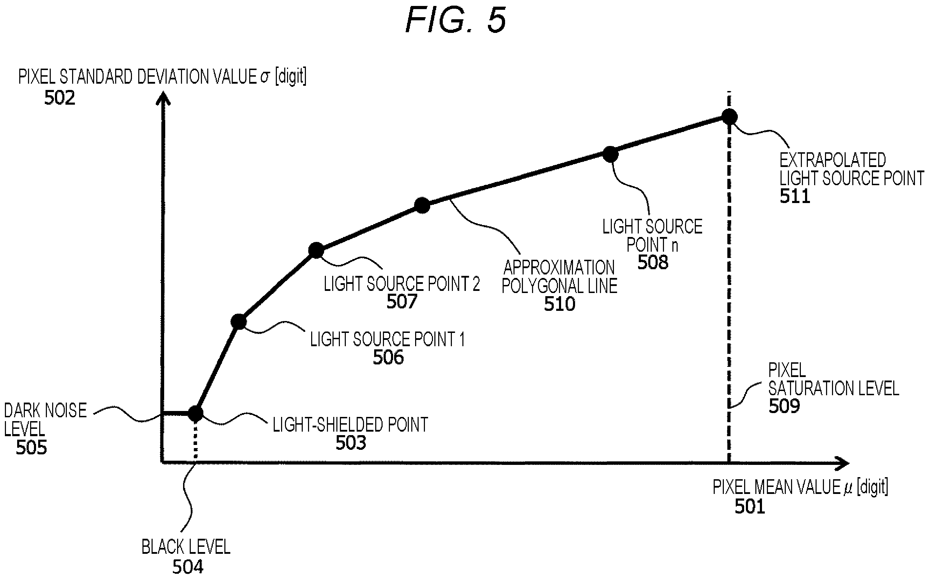

FIG. 5 in the present embodiment is a diagram illustrating measurement points and an approximation polygonal line in noise threshold value calculation. That is, the locus of a set of a mean value of pixel values (pixel mean value $\mu$ 501) and a standard deviation of pixel values (pixel standard deviation value $\sigma$ 502) satisfying the identified approximation polygonal line 510 (equation) is a polygonal line.

In FIG. 5 in the present embodiment, the total (n + 1) points of one light-shielded point 503, a light source point 1 506, a light source point 2 507, and a light source point n 511 are measured (where n ≥ 1). Differing from FIG. 2 in Embodiment 1, in FIG. 5 in the present embodiment, the measurement points are connected by a straight line to form an approximation polygonal line 510 as a whole. For a portion having a pixel value higher than that of the light source point n 508, a measurement point (extrapolated light source point 511) is added by extrapolation to define a range up to a pixel saturation level 509.

In the present embodiment, similarly to Embodiments 1 and 2, both the light-shielded point and the light source point are used. Thus, an effect that it is possible to accurately calculate the noise threshold value for the entire region from the dark portion to the bright portion is obtained.

Furthermore, in the present embodiment, it is not necessary to define the regression equation as in Embodiments 1 and 2. Thus, an effect that it is possible to perform approximation regardless of a form of the noise characteristics of the image sensor 112 in FIG. 1 is obtained.

Embodiment 4

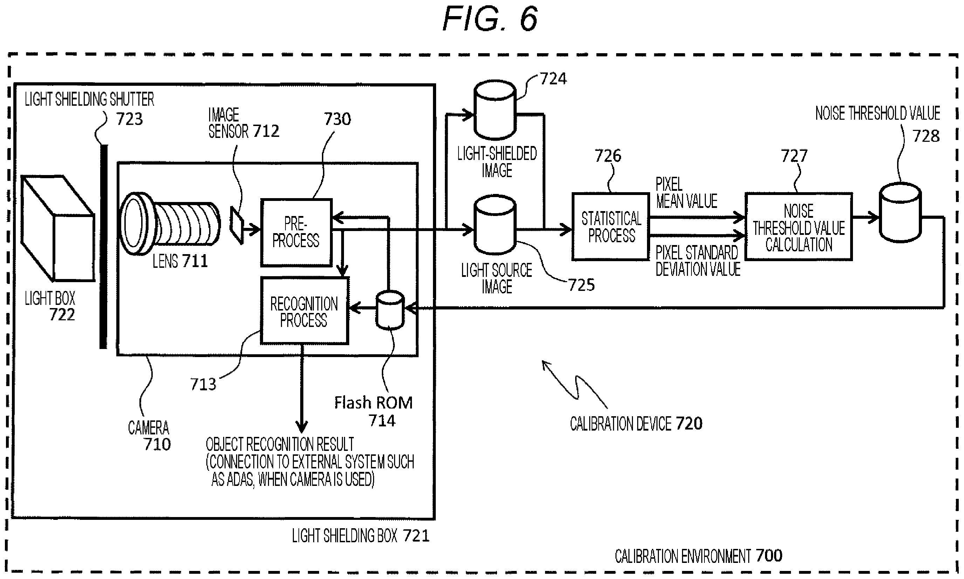

FIG. 6 illustrates an example of a configuration diagram of a calibration environment in the present embodiment.

A calibration environment 700, a camera 710, a lens 711, an image sensor 712, a recognition process 713, a flash ROM 714, a calibration device 720, a light shielding box 721, a light box 722, a light shielding shutter 723, a light-shielded image 724, a light source image 725, a statistical process 726, noise threshold value calculation 727, and a noise threshold value (calibration value) 728 in FIG. 6 are the same as the components having the same names in FIG. 1.

FIG. 6 is different from FIG. 1 in that a pre-process 730 is added. The pre-process 730 applies a digital gain correction process (multiplication) and digital offset correction (addition) to a digital image immediately after the image sensor 712, in order to adjust a black level and adjust sensitivity. Then, the pre-process outputs the digital image obtained in this manner. Values stored in the flash ROM 714 are used as correction setting values of the digital gain correction process and the offset correction process. The pre-process 730 may be implemented by a logic circuit or a processor.

Since the f value of the lens 711 and the sensitivity and black level of the image sensor 712 are different, the black level and the sensitivity vary for each camera. Digital gain correction and black level correction are performed in order to correct the all individual cameras to have predetermined sensitivity and a predetermined black level, so that performance can be obtained without adjusting the process contents of the recognition process 713 for each camera.

When the pre-processing unit 730 is applied, the noise threshold value changes, so that it is necessary to obtain a corrected noise threshold value. When the correction setting value of the pre-processing unit 730 is calibrated, the same process as the statistical process 726 is performed to obtain a measurement point, and the sensitivity and black level before correction are measured. Therefore, it is possible to reduce the time required for calibration by utilizing the measurement points measured by the calibration of the pre-processing unit 730 and simultaneously calibrating the noise threshold value. In the present embodiment, in order to reduce the time by reducing the number of measurement points, the noise threshold value after the processing of the pre-processing unit 830 is applied is estimated and output from the measurement point to which the processing of the pre-processing unit 730 is not applied.

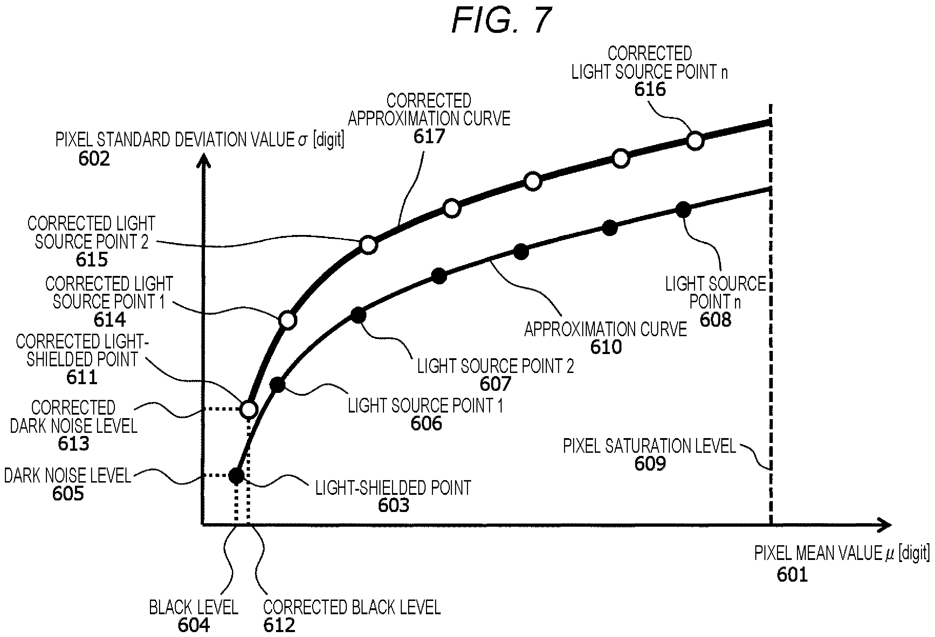

FIG. 7 in the present embodiment is a diagram illustrating measurement points and an approximation curve in noise threshold value calculation. A pixel mean value 601, a pixel standard deviation value 602, a light-shielded point 603, a black level 604, a dark noise level 605, a light source point 1 606, a light source point 2 607, a light source point n 608, a pixel saturation level 609, and an approximation curve 610 in FIG. 7 are the same as the components having the same names in FIG. 2.

Differing from FIG. 2, in FIG. 7, a corrected light-shielded point 611, a corrected black level 612, a corrected dark noise level 613, a corrected light source point 1 614, a corrected light source point 2 615, a corrected light source point n 616, and a corrected approximation curve 617 are added. Such components indicate that the measured values have changed after the pre-process 730 in FIG. 6 is applied to the components having the same name with not "corrected".

For example, when the digital gain correction is applied g times in the pre-process 730, the pixel mean value becomes g times and the pixel standard deviation value becomes g times. Furthermore, when the black level correction is applied, the corrected pixel mean value is shifted by the offset value.

Since the calculation contents of the pre-processing unit 730, that is, the multiplication, the addition, and the correction setting value thereof are known, the corrected measurement point is calculated from the measurement point before correction by calculation. The approximation curve is calculated from the corrected measurement points by the means in Embodiment 1.

That is, the corrected approximation curve 617 (equation) is identified from the light-shielded point (corrected light-shielded point 611) and the light source point (corrected light source points 1 to n) subjected to the gain/offset correction.

As another means, the corrected approximation curve 617 can be calculated by calculation by applying the calculation contents of the pre-processing unit 730 to the approximation curve 610 before correction. That is, the approximation curve 610 (equation) before correction is subjected to gain/offset correction to become the corrected approximation curve 617.

The noise threshold value calculation 727 in FIG. 6 outputs the corrected approximation curve 617 as the noise threshold value (calibration value) 728.

According to the method in the present embodiment, it is possible to estimate the corrected noise threshold value by using the measurement points before correction, which are measured by the calibration of the sensitivity or the black level. Thus, an effect that it is possible to reduce the calibration time is obtained.

In the present embodiment, the method of calculating the corrected noise threshold value based on Embodiment 1 has been described. However, the method may be based on Embodiment 2 or Embodiment 3.

Note that, the present invention is not limited to the above embodiments, and various modification examples may be provided. For example, the above embodiments are described in detail in order to explain the present invention in an easy-to-understand manner, and the above embodiments are not necessarily limited to a case including all the described configurations.

Further, some components in one embodiment can be replaced with the components in another embodiment, and the configuration of another embodiment can be added to the configuration of one embodiment.

Regarding some components in the embodiments, other components can be added, deleted, and replaced.

Further, the present invention is applied to a monocular camera including one camera unit, but may be applied to image recognition of a stereo camera. That is, when the camera is a stereo camera, and includes at least a memory that stores the noise threshold value according to the above embodiments, and a determination unit that determines that the adjacent pixels are an edge when the difference in pixel value between the adjacent pixels exceeds the noise threshold value.

Some or all of the configurations, functions, and the like may be implemented in hardware by being designed with an integrated circuit, for example. Further, the above-described respective components, functions, and the like may be realized by software by the processor interpreting and executing a program for realizing the respective functions. Information such as a program, a table, and a file, that realizes each function can be stored in a memory, a recording device such as a hard disk and a solid state drive (SSD), or a recording medium such as an IC card, an SD card, and a DVD.

Embodiments of the present invention may have the following aspects.

(1). A calibration method including: a step of obtaining a light-shielded image and a light source image from an image capturing device; a step of performing a statistical process (calculating a mean and a standard deviation) based on a light-shielded point obtained from the light-shielded image and a light source point obtained from the light source image; and a step of calculating a noise threshold value for distinguishing noise and an edge from each other, from a result of the statistical process obtained by a statistical process unit.

(2). The calibration method described in (1), in which one light-shielded point is provided, and n light source points ($n \geq 1$) are provided.

(3). The calibration method described in (2), in which an approximate equation is a quadratic equation.

(4). The calibration method described in (3), in which one light-shielded point is provided, one light source point is provided, and a quadratic equation is obtained by an analytical solution.

(5). The calibration method described in (2), in which an approximate equation is a cubic equation.

(6). The calibration method described in (1), in which an approximation method is a least squares method or a weighted least squares method.

(7). The calibration method described in (1), in which an approximate equation is a polygonal line.

(8). The calibration method described in (1), in which, when sensitivity correction is performed by using a digital gain, a result obtained by multiplying a mean value by a magnification of the digital gain with respect to a measurement point is set as a mean value of digital gain temperature characteristic application, and a result obtained by multiplying a standard deviation value by the magnification of the digital gain with respect to the measurement point is set as a standard deviation value of the digital gain temperature characteristic application.

(9). The calibration method described in (1), in which, when sensitivity correction is performed by using a digital gain, a result obtained by multiplying a mean value by a magnification of the digital gain with respect to a noise threshold value curve is set as a mean value of digital gain temperature characteristic application, and a result obtained by multiplying a standard deviation value by the magnification of the digital gain with respect to the noise threshold value curve is set as a standard deviation value of the digital gain temperature characteristic application.

(10). A camera using the calibration method in (1).

(11). A stereo camera using the calibration method in (1) .

According to (1) to (11) described above, it is possible to obtain an accurate noise level of an image sensor over the entire region from a dark portion to a bright portion. Therefore, as a result of the recognition process based on the noise threshold value, an effect that it is possible to suppress an occurrence of unrecognition and erroneous recognition to be low is obtained.

Reference Signs List

    100 calibration environment
    110 camera
    111 lens
    112 image sensor
    113 recognition process
    114 Flash ROM
    120 calibration device
    121 light shielding box
    122 light box
    123 light shielding shutter
    124 light-shielded image
    125 light source image
    126 statistical process
    127 noise threshold value calculation
    128 noise threshold value (calibration value)
    201 pixel mean value
    202 pixel standard deviation value
    203 light-shielded point
    204 black level
    205 dark noise level
    206 light source point 1
    207 light source point 2
    208 light source point n
    209 pixel saturation level
    210 approximation curve
    301 pixel mean value
    302 pixel standard deviation value
    303 light-shielded point
    304 black level
    305 dark noise level
    306 light source point
    307 pixel saturation level
    308 quadratic approximation curve
    401 start step
    402 step of measuring light-shielded point
    403 step of measuring light source point
    404 step of calculating intermediate equation K
    405 step of calculating coefficients of quadratic equation
    406 step of calculating noise threshold value (calibration value)
    407 step of writing noise threshold value (calibration value) in Flash ROM
    408 end step

501 pixel mean value
502 pixel standard deviation value
503 light-shielded point
504 black level
505 dark noise level
506 light source point 1
507 light source point 2
508 light source point n
509 pixel saturation level
510 approximation curve
511 extrapolated light source point
601 pixel mean value
602 pixel standard deviation value
603 light-shielded point
604 black level
605 dark noise level
606 light source point 1
607 light source point 2
608 light source point n
609 pixel saturation level
610 approximation curve
611 temperature characteristic application light-shielded point
612 temperature characteristic application black level
613 temperature characteristic application dark noise level
614 temperature characteristic application light source point 1
615 temperature characteristic application light source point 2
616 temperature characteristic application light source point n
617 temperature characteristic application approximation curve
700 calibration environment
710 camera
711 lens
712 image sensor
713 recognition process
714 Flash ROM
720 calibration device
721 light shielding box
722 light box
723 light shielding shutter
724 light-shielded image
725 light source image
726 statistical process
727 noise threshold value calculation
728 noise threshold value (calibration value)

**Claims**

1. A calibration method comprising:

   a step for obtaining a light-shielded image indicating an image captured in a light-shielded state and a light source image indicating an image captured in a state of uniform light irradiation;
   a step for identifying an equation indicating a correspondence between a mean value of pixel values and a standard deviation of the pixel value, from a light-shielded point and a light source point, the light-shielded point indicating a set of the mean value of the pixel values and the standard deviation of the pixel values in the light-shielded image, and the light source point indicating a set of the mean value of the pixel values and the standard deviation of the pixel values in the light source image; and
   a step for calculating a standard deviation of the pixel values corresponding to a mean value of the pixel value according to an identified equation, as a noise threshold value.

**2.** The calibration method according to claim 1, wherein the equation is identified from the one light-shielded point and the one or more light source points.

**3.** The calibration method according to claim 2, wherein, in the equation, the mean value of the pixel values is a quadratic equation relating to the standard deviation of the pixel values.

**4.** The calibration method according to claim 3, wherein the equation is identified from the one light-shielded point and the one light source point.

**5.** The calibration method according to claim 2, wherein, in the equation, the mean value of the pixel values is a cubic equation relating to the standard deviation of the pixel values.

**6.** The calibration method according to claim 1, wherein the equation is identified by a least squares method or a weighted least squares method.

**7.** The calibration method according to claim 1, wherein a locus of a set of a mean value of the pixel values and a standard deviation of the pixel values satisfying the identified equation is a polygonal line.

**8.** The calibration method according to claim 1, wherein the equation is identified from the light-shielded point and the light source point, which are subjected to gain/offset correction.

**9.** The calibration method according to claim 1, wherein the equation is subjected to gain/offset correction.

**10.** A camera using the noise threshold value calculated by the calibration method according to claim 1, the camera comprising:

a memory that stores the noise threshold value; and
a determination unit that, when a difference in pixel value between adjacent pixels exceeds the noise threshold value, determines that the pixels are an edge.

**11.** The camera according to claim 10, wherein the camera is a stereo camera.

*FIG. 1*

# FIG. 2

PIXEL STANDARD DEVIATION VALUE $\sigma$ [digit]
**202**

PIXEL MEAN VALUE $\mu$ [digit]
**201**

LIGHT SOURCE POINT n
**208**

APPROXIMATION CURVE
**210**

LIGHT SOURCE POINT 2
**207**

LIGHT SOURCE POINT 1
**206**

PIXEL SATURATION LEVEL
**209**

DARK NOISE LEVEL
**205**

LIGHT-SHIELDED POINT
**203**

BLACK LEVEL
**204**

EP 3 979 637 A1

*FIG. 3*

PIXEL STANDARD DEVIATION VALUE $\sigma$ [digit]
**302**

LIGHT SOURCE
POINT
**306**

QUADRATIC
APPROXIMATION CURVE
**308**

PIXEL
SATURATION LEVEL
**307**

DARK NOISE
LEVEL
**305**

LIGHT-SHIELDED POINT
**303**

PIXEL MEAN VALUE $\mu$ [digit]
**301**

BLACK LEVEL
**304**

EP 3 979 637 A1

# FIG. 4

START — 401

MEASURE LIGHT-SHIELDED POINT ($\mu_{dark}$, $\sigma_{dark}$) — 402

MEASURE LIGHT SOURCE POINT ($\mu_{light}$, $\sigma_{light}$) — 403

CALCULATE SYSTEM GAIN $K = \dfrac{\sigma_{light}^2 - \sigma_{dark}^2}{\mu_{light} - \mu_{dark}}$ — 404

CALCULATE COEFFICIENTS OF QUADRATIC
EQUATION $\mu_y = a\sigma_y^2 + b\sigma_y + c$

$$a = \left(\frac{1}{K}\right), b = 0, c = \left(-\frac{1}{K}\sigma_{dark}^2 + \mu_{dark}\right)$$ — 405

CALCULATE NOISE THRESHOLD VALUE
(CALIBRATION VALUE)

$$\sigma_y = \begin{cases} \sigma_{dark} & if(\mu \le \mu_{dark}) \\[2mm] \dfrac{\sqrt{\mu_y + \dfrac{b^2}{4a} - c}}{\sqrt{a}} - \dfrac{b}{2a} & else \end{cases}$$ — 406

WRITE NOISE THRESHOLD VALUE
(CALIBRATION VALUE) IN Flash ROM — 407

END — 408

FIG. 5

PIXEL STANDARD DEVIATION VALUE $\sigma$ [digit]
502

EXTRAPOLATED LIGHT SOURCE POINT
511

LIGHT SOURCE POINT n
508

APPROXIMATION POLYGONAL LINE
510

LIGHT SOURCE POINT 2
507

LIGHT SOURCE POINT 1
506

LIGHT-SHIELDED POINT
503

BLACK LEVEL
504

DARK NOISE LEVEL
505

PIXEL SATURATION LEVEL
509

PIXEL MEAN VALUE $\mu$ [digit]
501

## FIG. 6

LIGHT SHIELDING SHUTTER 723

IMAGE SENSOR 712

730

LIGHT BOX 722

LENS 711

PRE-PROCESS

RECOGNITION PROCESS

713

CAMERA 710

Flash ROM 714

OBJECT RECOGNITION RESULT (CONNECTION TO EXTERNAL SYSTEM SUCH AS ADAS, WHEN CAMERA IS USED)

LIGHT SHIELDING BOX 721

724

LIGHT-SHIELDED IMAGE

LIGHT SOURCE IMAGE

725

STATISTICAL PROCESS 726

PIXEL MEAN VALUE

PIXEL STANDARD DEVIATION VALUE

NOISE THRESHOLD VALUE CALCULATION 727

NOISE THRESHOLD VALUE 728

CALIBRATION DEVICE 720

CALIBRATION ENVIRONMENT 700

EP 3 979 637 A1

# FIG. 7

CORRECTED LIGHT SOURCE POINT n
616

CORRECTED APPROXIMATION CURVE
617

PIXEL STANDARD DEVIATION VALUE $\sigma$ [digit]
602

CORRECTED LIGHT SOURCE POINT 2
615

CORRECTED LIGHT SOURCE POINT 1
614

CORRECTED LIGHT-SHIELDED POINT
611

CORRECTED DARK NOISE LEVEL
613

DARK NOISE LEVEL
605

LIGHT SOURCE POINT n
608

APPROXIMATION CURVE
610

LIGHT SOURCE POINT 2
607

LIGHT SOURCE POINT 1
606

LIGHT-SHIELDED POINT
603

PIXEL SATURATION LEVEL
609

PIXEL MEAN VALUE $\mu$ [digit]
601

BLACK LEVEL
604

CORRECTED BLACK LEVEL
612

| | | International application No. |
|---|---|---|
| | **INTERNATIONAL SEARCH REPORT** | PCT/JP2020/020235 |

**A. CLASSIFICATION OF SUBJECT MATTER**
H04N 17/00(2006.01)i; G06T 7/80(2017.01)i; H04N 5/232(2006.01)i; H04N 5/243(2006.01)i
FI: H04N5/243; G06T7/80; H04N5/232 290; H04N17/00 200
According to International Patent Classification (IPC) or to both national classification and IPC

**B. FIELDS SEARCHED**

Minimum documentation searched (classification system followed by classification symbols)
H04N17/00; G06T7/80; H04N5/232; H04N5/243

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-184767 A (CANON INC.) 22.10.2015 (2015-10- | 1, 2, 6-9 |
| Y | 22) paragraphs [0018]-[0023], [0059]-[0069] | 3-5, 10, 11 |
| Y | WO 2013/161384 A1 (OLYMPUS CORP.) 31.10.2013 (2013-10-31) paragraph [0059] | 3-5 |
| Y | JP 2010-092461 A (CANON INC.) 22.04.2010 (2010-04-22) paragraph [0094] | 10, 11 |

| | |
|---|---|
| ☐ Further documents are listed in the continuation of Box C. | ☒ See patent family annex. |

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 July 2020 (17.07.2020) | 04 August 2020 (04.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT | | International application No. | |
|---|---|---|---|
| Information on patent family members | | PCT/JP2020/020235 | |
| Patent Documents referred in the Report | Publication Date | Patent Family | Publication Date |
| JP 2015-184767 A | 22 Oct. 2015 | US 2015/0269735 A1 paragraphs [0025]- [0029], [0058]-[0073] | |
| WO 2013/161384 A1 | 31 Oct. 2013 | US 2015/0043805 A1 paragraph [0064] CN 104254757 A KR 10-2014-0146137 A | |
| JP 2010-092461 A | 22 Apr. 2010 | US 2010/0066868 A1 paragraph [0100] | |

Form PCT/ISA/210 (patent family annex) (January 2015)

**EP 3 979 637 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010093623 A